# EUROPÄISCHE PATENTSCHRIFT

(11) **EP 1 369 364 B1**
(45) Veröffentlichungstag und Bekanntmachung des Hinweises auf die Patenterteilung: **30.03.2005**
(21) Anmeldenummer: 03400033.1
(22) Anmeldetag: 03.06.2003
(51) Int. Cl.: B65G 47/91

(54) **Greifvorrichtung zum Aufnehmen von Stückgut**
Gripping device for unit loads
Dispositif de préhension de charges isolées

(30) Priorität: 04.06.2002 DE 10224598
(43) Veröffentlichungstag der Anmeldung: 10.12.2003
(73) Patentinhaber: Festo AG & Co, 73734 Esslingen (DE)
(72) Erfinder: Fürst, Gerhard, 86688 Marxheim (DE); Glück, Markus, 89584 Ehingen/Donau (DE)
(74) Vertreter: Bregenzer, Michael

(56) Entgegenhaltungen:
- DE-A- 4 444 960
- DE-B- 1 200 196
- US-A- 3 174 789
- US-A- 3 627 369
- US-A- 4 561 686
- US-A- 4 582 353
- US-A- 5 388 879

## Beschreibung

Die vorliegende Erfindung betrifft eine Greifvorrichtung zum Aufnehmen von Stückgut gemäß dem Oberbegriff des Anspruchs 1. Insbesondere betrifft die vorliegende Erfindung eine universelle Greifvorrichtung, bei der das Stückgut mittels einer universell einsetzbaren Halte- /Greifvorrichtung durch teilweises oder vollständiges Umschließen des anzuhebenden Einzelteils mit einer folien- bzw. membranartig ausgeführten Hülle in Kombination mit der Ausübung einer Haltekraft, beispielsweise mittels Unterdruck von beliebigen Unterlagen oder aus verschiedensten Behältnissen, aufgegriffen, angehoben oder vereinzelt werden kann, wobei vorteilhafterweise die Kenntnis der exakten Position, Lage, Ausrichtung und Geometrie des anzuhebenden Stückguts nicht erforderlich ist.

Sauggreifer zum Aufnehmen und Handhaben von Kleinstückgut bilden häufig das eigentliche Greiforgan am Manipulatorarm automatisierter Handhabungsvorrichtungen. Kernstück eines solchen Sauggreifers ist ein mit Unterdruck beaufschlagbarer, im wesentlichen als Saugnapf ausgebildeter Kopf, der im Regelfall auf ebenen oder annähernd ebenen Angriffsflächen aufgesetzt wird, wodurch die Oberfläche des jeweiligen Stückguts fest ansaugbar ist. Die durch Erzeugung eines Unterdrucks ausgeübte Haltekraft ermöglicht das Abheben und Transportieren von Stückgut (beispielsweise Verpackungen oder Werkstücken). Alternative Realisierungsformen von Greifwerkzeugen müssen punktgenau an das zu hebende Stückgut herangeführt werden, damit Saugkräfte an Oberflächen oder mittels beweglicher Halte- bzw. Greifvorrichtungen mechanisch induzierte Hebekräfte an charakteristischen Kanten bzw. Grenzflächen angreifen können.

Mit den eingangs beschriebenen Merkmalen werden Sauggreifer und mechatronische, d.h. im weitesten Sinne elektromechanische Greifwerkzeuge insbesondere an Handhabungs-, Verpackungs- oder automatisierten Hebeeinrichtungen eingesetzt. Eine derartige Anordnung ist beispielsweise in den Schriften DE 195 09 951 C2 oder DE 199 55 615 A1 beschrieben. Damit werden Kleinstückgüter, in der Regel leichte quaderförmige Verpackungen mit glatter Oberfläche, in eine regalförmige Lagereinrichtung mit einer Vielzahl von über- bzw. nebeneinander angeordneten Stellflächen eingestellt. Die Greifereinrichtung weist dabei mindestens eine Handhabungsvorrichtung zum Anheben und zur Entnahme der Stückgüter auf, welche typisch wiederum mindestens einen Sauggreifer aufweist.

In der Praxis sind jedoch häufig beliebigst geartete Stückgüter von starren oder beweglichen Unterlagen oder aus verschiedenst ausgestalteten Behältnissen aufzuheben und zu transportieren, auf die mitunter aufgrund weicher, rauher oder inhomogener bzw. unebener Oberflächen - beispielsweise durch Kanten von aufgeklebten Etiketten oder dergleichen - oder infolge unterschiedlicher Lage und Geometrie der Teile kein hinreichender Unterdruck aufbaubar ist, bzw. keine Angriffsfläche erkennbar oder erreichbar ist, wodurch folglich die zur zuverlässigen Handhabung erforderlichen Saug-, Halteoder sonstigen Klemmkräfte nicht gegeben sind. In diesen Fällen ist ein automatisierter Zugriff erheblich erschwert oder in einigen Fällen gänzlich unmöglich, sodass das zu greifende Stückgut nicht, bzw. nur durch exakte Positionierung einer geeigneten Greifervorrichtung an ausgezeichneten Punkten, Kanten oder Flächen zuverlässig fixiert werden kann. Meist erfordert dies die Addition aufwendiger Sensorik/Aktorik, beispielsweise durch Endschalter, optische Detektoren, bildverarbeitende Systeme oder eine beliebige Kombination derartiger Sensoren in Verbindung mit geeigneter Signalverarbeitung und Steuerungstechnik zur Lage- oder Geometrieerkennung des anzuhebenden Stückguts bzw. zur Positionsermittlung der aktiven Greifvorrichtung in Relation zum zu greifenden Stückgut.

Weitere Hebevorrichtungen sind bekannt, bei denen durch starre, bzw. in Translationsrichtung linear bewegliche seitliche Führungsschienen, beispielsweise in Form von parallel oder konisch angeordneten Backen oder Hülsen, sichergestellt wird, dass ein von der Saugvorrichtung aufgenommenes Stückgut, beispielsweise eine quaderförmige Verpackung, beim Zugriff ausgerichtet wird und somit ein zuverlässiges Anheben und Transportieren der Stückgüter gewährleistet ist.

Aus der US 4,582,353 ist eine Greifvorrichtung zum Aufnehmen von Stückgute, insbesondere von Nahrungsmitteln, bekannt, bei dem sich ein dünner "Rock" aus beispielsweise natürlichem Latex an das aufzunehmende Stückgut anpasst wenn die Greifvorrichtung mit Unterdruck beaufschlagt wird. Ein unteres Gehäuse-Ende der Greifvorrichtung ist elastisch und nach unten hin konisch aufgeweitet. Unterhalb bzw. innerhalb des aufgeweiteten Konuses ist der "Latex-Rock" angeordnet. Beim Ansaugen des Stückgutes kann sich der obere Konus aufweiten jedenfalls an das Stückgut in geringem Umfang anpassen.

Es ist daher die Aufgabe der vorliegenden Erfindung, eine Greifvorrichtung der eingangs genannten Art belastbarer und zweckmäßigerweise verschleißärmer auszugestalten.

Die Aufgabe wird durch eine Greifvorrichtung gemäß der technischen Lehre des Anspruchs 1 gelöst. Die Unteransprüche stellen vorteilhafte Weiterbildungen dar.

Zur Lösung der vorgenannten Aufgabenstellung schlägt die Erfindung vor, dass die Greifvorrichtung entgegen aller bisherigen Lösungsansätze das zu greifende Teil ganz oder teilweise mittels einer membran- oder folienartig ausgeführten Hülle oder Greifeinrichtung luftdicht umschließt. Der Greifer ist somit nicht starr, aus festen Haltebacken realisiert, sondern dynamisch aufgebaut und passt sich somit der Form bzw. Kontur des zu greifenden Werkstücks flexibel an.

Durch die erfindungsgemäße Kombination der Saugvorrichtung mit der membran- oder folienartig ausgeführten Hülle des Greifwerkzeugs ergibt sich eine Reihe von über den Stand der Technik hinausgehenden bedeutsamen Vorteilen, die durch das Zusammenwirken dieser Funktionselemente zustande kommt. So können im Gegensatz zu bisher bekannten Realisierungsformen von Greif- und Saugvorrichtungen vor allem auch sich durch sensitive und weiche Oberflächen auszeichnende Stückgüter zerstörungsfrei ohne Verletzung des zu greifenden Teils bzw. seiner Oberfläche zuverlässig angehoben werden. Der Sauggreifer ist zudem universell einsetzbar. Er muss notwendigerweise nur ungefähr die Größe und Form des zu greifenden Stückguts besitzen.

Unter Stückgut werden im Zusammenhang mit der vorliegenden Erfindung einzelne Gegenstände verstanden, aber auch Schüttgüter und gebündelte Gegenstände, die eine beliebige Größe und Form aufweisen können.

Beim Zugriff sind wesentlich geringere Anforderungen an die Positionsgenauigkeit des Greifwerkzeuges erforderlich, da sich die Form des zumindest teilweise oder ganz folien- bzw. membranartig ausgeführten und somit flexiblen Sauggreifers infolge des beim Saugen ausgeübten Unterdrucks der Form des anzuhebenden Werkstücks passgenau selbstjustierend anpasst. Hinzu kommt, dass die Haltekraft F aufgrund der erheblich größeren, durch die membranartige Hülle abgedeckten und somit umschlossenen Fläche A bei gleichem Umgebungs- bzw. Unterdruck p wesentlich größer ist als bei Vorrichtungen mit konventionell ausgeführten Saugköpfen und F=p*A gilt.

Ein weiterer bedeutsamer Vorteil gegenüber bisherigen Greifwerkzeugen, wie sie beispielsweise in DE 199 55 615 A1 beschrieben sind, ergibt sich aus der Tatsache, dass bei der hier vorgeschlagenen erfindungsgemäßen Lösung keine Ausübung eines mechanischen Anpressdrucks über Hilfsvorrichtungen oder günstig ausgeführte Haltebacken erforderlich ist.

Die Kombination der bisher im einzelnen aufgeführten Vorteile führt zum Hauptunterscheidungsmerkmal gegenüber bisherigen Greifwerkzeugen, mit denen ein Entnehmen wahllos in Sammelbehältnissen vorliegender Kleinteile und Schüttgüter bisher nicht oder allenfalls nur mittels komplexer Positionierungssysteme in Kombination mit aufwendigen bildverarbeitenden Systemen zur exakten Positions- und Lagererkennungen möglich war. Derartige Lage- und Positionserkennungssysteme, welche sich in der Regel durch enorm hohe Anforderungen an die Rechenleistung des Sensor- und Rechnersystems sowie hohe Anschaffungs- und Betriebskosten auszeichnen, sind bei der vorgeschlagenen Erfindung nicht mehr zwingend erforderlich. Vielmehr genügt eine einfache, sich beispielsweise durch eine stark simplifizierte Sensor/Aktor-Kombination auszeichnende Realisierungsform zur Lageerkennung, um eine Vereinzelung sowie das sichere Greifen und Abheben in ungeordneter, wahlloser Position vorliegender Stückgüter aus Sammelbehältnissen verschiedenartiger Form zu ermöglichen.

Zur praktischen Umsetzung der Erfindung sind mehrere Realisierungsformen denkbar, die sich allesamt durch eine flexible membran- oder folienartig ausgeführte Hülle auf der Unterseite des Greifwerkzeugs auszeichnen. Im folgenden wird die Erfindung anhand von Ausführungsbeispielen unter Bezugnahme auf die schematischen Zeichnungen der folgenden Figuren näher erläutert. Es zeigen:
- Fig. 1: schematisch einen Querschnitt durch ein Greifwerkzeug, welches im Ausgangszustand ohne Unterdruck über einem zu hebenden Stückgut beliebiger Form angeordnet ist,
- Fig. 2: schematisch einen Querschnitt desselben Greifwerkzeugs, welches im angesaugten Zustand mittels des entstehenden Unterdrucks ein Aufgreifen und Anheben des zu hebenden Werkstücks durch teilweises Umhüllen ermöglicht,
- Fig. 3: schematisch einen Querschnitt durch ein weiteres Ausführungsbeispiel, bei dem das Stückgut im angesaugten Zustand durch die membran- oder folienartig ausgeführte flexible Hülle des Greifers beim Anheben und Transportieren großenteils umschlossen wird,
- Fig. 4: schematische Darstellung eines weiteren Ausführungsbeispiels, bei dem ein Anwendungsfall für das erfolgreiche Anheben eines Stückguts mit weicher, unebener und sensitiver Oberfläche aus dem Anwendungsbereich der Lebensmittelindustrie beispielhaft zur Demonstration der Vorzüge der Erfindung gezeigt werden soll,
- Fig. 5: schematisch einen Querschnitt durch ein weiteres Ausführungsbeispiel, bei dem ein Anwendungsbeispiel für das Anheben und Vereinzeln von Kleinschüttgütern gezeigt wird, welche in beliebiger Anordnung in einem Sammelbehältnis vorliegen und aus diesem einzeln entnommen werden sollen,
- Fig. 6: schematisch einen Querschnitt durch eine weiteres Ausführungsbeispiel einer Greifvorrichtung, welche eine in sich geschlossene luftdichte, aufblasbare Folienhülle aufweist und im Ausgangszustand ohne Überdruck, über einem Stückgut angeordnet ist,
- Fig. 7: schematisch einen Querschnitt der Greifvorrichtung von Fig. 6, wobei mittels Überdruck, bzw. durch Aufblasen der durch die Folienhülle gebildeten Luftkammer eine Haltekraft auf das anzuhebende Stückgut ausgeübt wird.

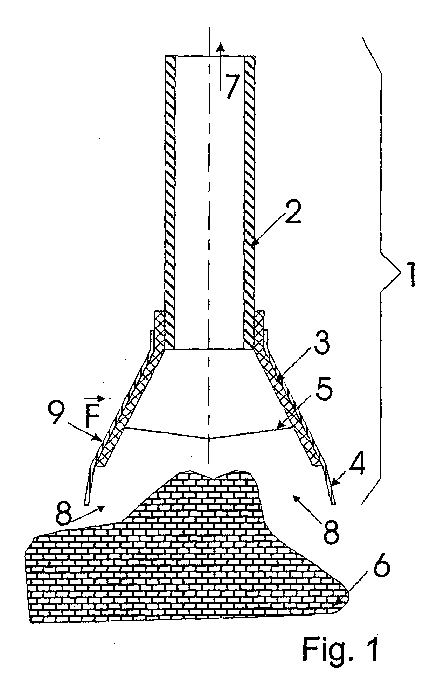

Im Ausführungsbeispiel gemäß Fig. 1 ist eine schematische Darstellung eines Querschnitts durch ein Greifwerkzeug im Ausgangszustand dargestellt. Die Greifvorrichtung 1, bestehend aus einem Saugrohr 2, mehrerer im Ruhezustand abgespreizter Haltevorrichtungen 3, auf denen wiederum eine folienartig ausgeführte luftdichte Hülle 4, beispielsweise aus Folienkunststoffen, aufgebracht ist. Diese ist im Ruhezustand geöffnet. Innerhalb des Saugrohrs 2 zwischen den jeweils abgespreizten Haltevorrichtungen 3 sind typisch schnurartige Verbindungen 5 angebracht. Diese Verbindungen 5 können ebenso luftdurchlässige, netz- oder gewebeartig ausgeführte Rückhalteverbindungen sein, welche einerseits den eigentlichen Zugriffsvorgang, das Ansaugen der membran- oder folienartig ausgeführten Hülle 4 über das Anziehen der beweglichen Haltevorrichtungen 3 auszulösen vermögen und andererseits ein unerwünschtes Absaugen von zu greifenden Schüttgütern und kleineren Gegenständen verhindern. Die abgespreizten Haltevorrichtungen 3 und die darüber angeordnete membran- bzw. folienartig ausgeführte Außenhaut müssen dabei nicht notwendigerweise unmittelbar miteinander verbunden oder gegenseitig fixiert sein.

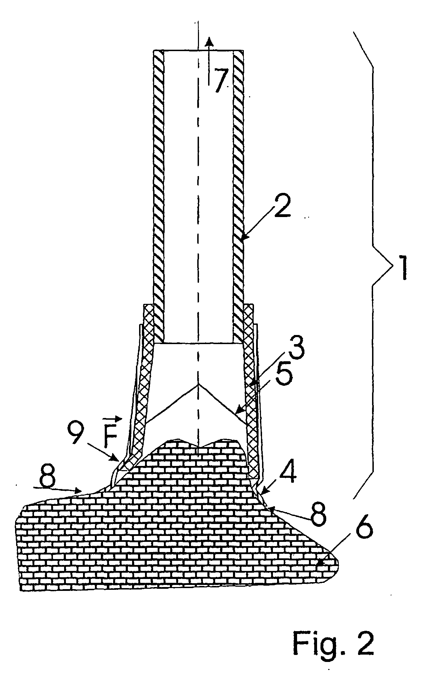

Wird diese zuvor in ihrem Aufbau beschriebene Greifvorrichtung 1 über einem beliebig vorliegenden Stückgut 6 in Position gebracht und gleichzeitig über das Saugrohr 2 beispielsweise durch einen saugenden Luftstrom 7 im Innenbereich des Greifwerkzeuges ein Unterdruck erzeugt, so vermögen die daraus resultierenden Unterdrücke und Luftströme 8 die Hülle 4 infolge der auf sie ausgeübten Haltekraft 9 anzuziehen und passgenau gegen die Oberfläche des Stückguts 6 zu pressen, wobei durch teilweises Abdecken seiner Oberfläche oder vollständiges Umhüllen des Stückguts 6 ein abgeschlossenes System gebildet wird. Aufgrund der Saugwirkung kann die zum Anheben erforderliche Haltekraft über die Greifvorrichtung 1 auf das zu hebende Stückgut 6 ausgeübt werden. Dieser Betriebszustand ist dargestellt in Fig. 2, einer schematischen Querschnittszeichnung derselben Greifvorrichtung 1. Deutlich gezeigt wird, dass beim Zugriff in Folge des saugenden Luftstroms 7 ein Unterdruck erzeugt wird, mit dem zunächst die Hülle 4 angesaugt wird und dies zu einer Abdichtung führt, wobei die flexibel ausgeführten Haltevorrichtungen 3 ebenso zusammengepresst werden. In Folge des sich zwischen Greifvorrichtung 1 und Stückgut 6 weiter aufbauenden Unterdrucks und der dadurch verstärkten Haltekräfte 9 ist ein Aufgreifen und Anheben des zu hebenden Stückguts 6 möglich.

Denkbar sind weitere Varianten dieses Greiferaufbaus, bei denen das Saugrohr 2 und die stirnseitig angebrachten, im Ruhezustand abgespreizten Halte- oder Stützvorrichtungen 3 aus einem zusammenhängenden Werkstück, d.h. einstückig realisiert sind, wobei durch geeignete Auswahl, Dimensionierung und Bearbeitung des Ausgangsmaterials, beispielsweise geschicktes Biegen, Verjüngen oder Knicken, die zuvor beschriebenen Funktionalitäten erzielt werden. Ebenso denkbar sind Ausführungstypen, bei denen durch geeignete Auswahl, Dimensionierung und Bearbeitung des Ausgangsmaterials sowie das Anbringen scharnierartig ausgelegter Sollknickstellen oder Gelenke die Greiferfunktionalität weiter verbessert wird.

Weiter ist es möglich, eine gezielte Erhöhung der Klemmwirkung auf zumindest dem Stückgut 6 zugewandten Klemmflächen durch reibungserhöhende Mittel zu erreichen, welche wiederum auf geschickte Auslegungen entweder der Hülle 4, der Haltevorrichtungen 3 oder einer Kombination beider Realisierungsformen zurückgehen. Denkbar sind reibungserhöhende, rutschhemmende Beschichtungen oder weiche, nachgiebig verformbare Auflagen, insbesondere aus einem schaumgummiartigen Material.

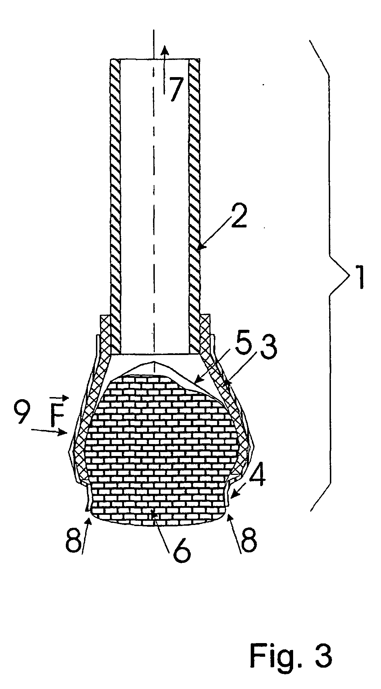

Fig. 3 zeigt im Querschnitt den äußerst vorteilhaften, durch bisherige Greiferlösungen im Regelfall nicht möglichen Einsatz der erfindungsgemäßen Greifvorrichtung 1 für einen weiteren Anwendungsfall, bei dem das zu hebende Stückgut 6 im angesaugten Zustand durch die membran- oder folienartig ausgeführte flexible Hülle 4 der Greifvorrichtung 1 beim Anheben und Transportieren großenteils umschlossen wird. Damit wird durch die erfindungsgemäße Greifvorrichtung 1 erstmalig ein verbesserter, universell einsetzbarer Sauggreifer vorgestellt, mit dem es möglich wird, Stückgüter mit unregelmäßiger, unebener, sensitiver oder weicher Oberfläche, die durch bekannte Realisierungsformen von mechanischen Greifern, oder Vorrichtungen mit Saugköpfen schlecht oder nicht ansaugbar sind, und mit unterschiedlichster Gestalt aus einer nahezu beliebigen Position und Lage von starren oder beweglichen Unterlagen unterschiedlichster Ausgestaltung aufzunehmen, zu vereinzeln und zu transportieren.

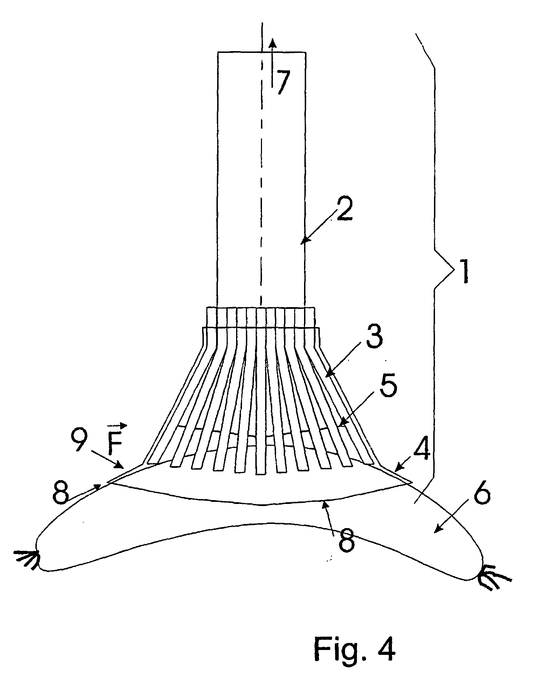

Fig. 4 zeigt beispielhaft einen Anwendungsfall aus dem Bereich der Lebensmittelindustrie, welcher eine schematische Darstellung für das erfolgreiche Anheben eines nur teilweise durch die Hülle 4 umhüllten Stückguts 6 mit weicher, unebener und sensitiver Oberfläche zur Demonstration der Vorzüge der Erfindung zeigt. Auch hier genügt es, die Greifvorrichtung 1 nur mit einfacher Positioniergenauigkeit anzufahren, um dann durch einen saugenden Luftstrom 7 über das Saugrohr 2 das Schließen und passgenaue Anlegen der Hülle 4 zu erzielen, welche wiederum ebenso das Anlegen der Haltevorrichtungen 3 zur Folge hat. Durch den unmittelbaren Kontakt von folienoder membranartig ausgeführter Hülle 4 und Stückgut 6, gelingt es vorteilhafterweise, weiche, unebene oder sensitive Stückgutoberflächen passgenau abzudichten, was in Fig. 4 durch die Unterdrücke und Luftströme 8 angedeutet ist, wodurch wiederum die zum Anheben des Stückguts 6 erforderliche Haltekraft 9 durch die Greifvorrichtung 1 ausgeübt wird. Unterstützend kommt hinzu, dass aufgrund der erheblich größeren, durch die membranartige Hülle abgedeckten und somit umschlossenen Klemmfläche A bei gleichem Umgebungs- bzw. Unterdruck p wesentlich geringere Kräfte an den Klemmflächen der Hülle 4 auf das Stückgut 6 ausgeübt werden, wodurch sensitive Oberflächen schonend kontaktiert werden und beim Greifvorgang mit höchster Wahrscheinlichkeit nicht beschädigt werden, was im übrigen durch Auslegung der Klemmflächen mit Schutzschichten oder schaumgummiartigen Materialien zusätzlich unterstützt und abgesichert werden kann.

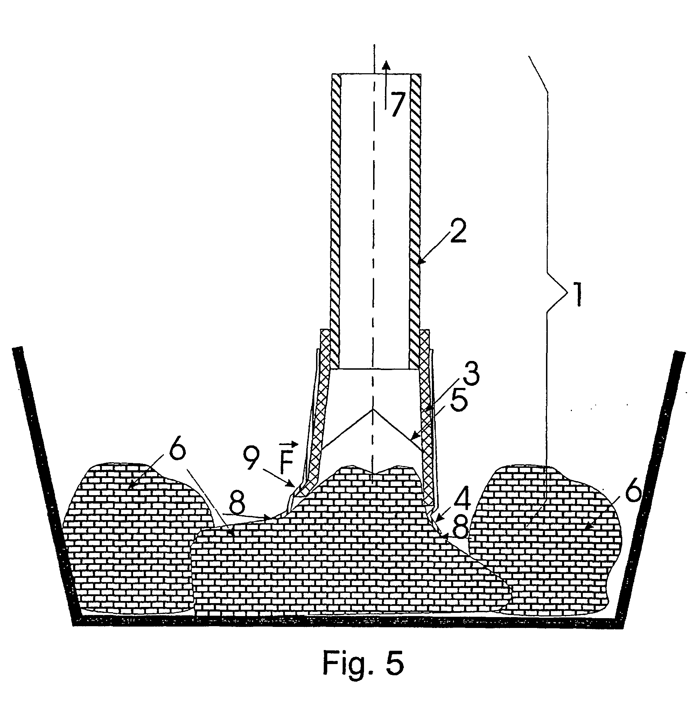

In Fig. 5 wird ein Greifen und Vereinzeln von in beliebiger Form, Größe und Position vorliegender Stückgüter 6 aus einem Sammelbehältnis dargestellt. Dieser Anwendungsfall demonstriert das hauptsächliche Alleinstellungsmerkmal gegenüber bisherigen Greifwerkzeugen, mit denen ein Entnehmen wahllos in Sammelbehältnissen vorliegender Kleinteile und Schüttgüter bisher nicht oder allenfalls unter Nutzung komplexer Positionierungssysteme in Kombination mit aufwendigen bildverarbeitenden Systemen zur exakten Positions- und Lagererkennungen möglich war. Für einen derartigen Anwendungsfall genügt es, sich mit der erfindungsgemäßen Lösung der Greifvorrichtung 1 den in beliebiger Form im Sammelbehältnis vorliegenden Stückgütern 6 nur grob nähern. Durch den saugenden Luftstrom 7 vergrößert sich allein bei bloßer Annäherung der Greifvorrichtung 1 an ein Stückgut 6 und die dadurch erhöhte Sogwirkung, was durch die Unterdrücke und Luftströme 8 dargestellt ist, lokal die Ansaugung, was zum Schließen der folien- oder membranartig ausgeführten Hülle 4 führt, welche sich passgenau an nur ein Stückgut 6 anlegt und damit die zum Anheben und Vereinzeln der Schüttgüter erforderliche Haltekraft 9 ausübt.

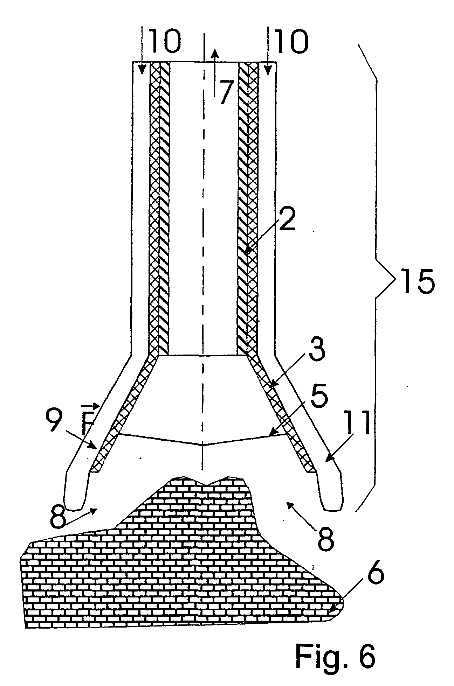

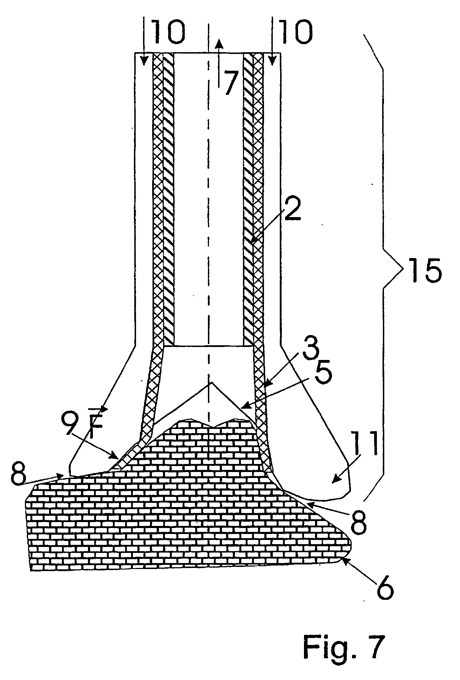

Ebenfalls denkbar ist es, beispielsweise zum Anpressen der folien- bzw. membranartig ausgeführten flexiblen Hülle 4 der Greifvorrichtung anstatt der ausschließlichen Nutzung eines Unterdrucks durch geeignete Ausbildung der Greiferperipherie eine dem Erfindungsgegenstand vergleichbare Greifvorrichtung zu bilden, bei der mittels Überdruck eine folien- bzw. membranartig ausgeführte haftende Hülle 4 an das Stückgut 6 angedrückt wird. Fig. 6 zeigt schematisch einen Querschnitt durch ein derartiges Ausführungsbeispiel einer erfindungsgemäßen Greifvorrichtung 15, welche jedoch im Gegensatz zu den vorangehenden Ausführungsbeispielen eine in sich geschlossene luftdichte, aufblasbare Hülle 11 aufweist, und in der Abbildung im Ausgangszustand ohne Überdruck, über einem Stückgut 6 angeordnet, dargestellt ist. Durch Aufblasen der Hülle 11 mit einem Luftstrom 10 und evtl. zusätzlichem - aber nicht zwingenderweise erforderlichen - saugenden Luftstrom 7 des Innenbereichs der Greifvorrichtung 15 wird die folien- bzw. membranartige Hülle 11 passgenau gegen das Stückgut 6 gepresst, wobei durch teilweises Abdecken seiner Oberfläche oder vollständiges Umhüllen des Stückguts 6 und in Folge der äußeren Haltekraft 9 die zum Abheben erforderliche Haltekraft durch die Greifvorrichtung 15 ausgeübt wird. Dieser Betriebszustand ist in Fig. 7 schematisch im Querschnitt dargestellt.

In dem Ausführungsbeispiel der Fig. 6 und 7 ist die Hülle 4 der Greifvorrichtung 1 durch die Hülle 11 ersetzt, in der die durch Überdruck die zum Anheben des Stückgutes 6 erforderliche Haltekraft 9 erzeugt wird und die sich unmittelbar an das Stückgut 6 anpasst. Erfindungsgemäß ist jedoch auch vorgesehen, dass entsprechend der Greifvorrichtung 1 eine Hülle 4 vorgesehen ist, auf deren Aussenseite sich eine weitere im wesentlichen luftdichte Hülle befindet, die mit einem Überdruck beaufschlagbar ist. Auch hierdurch wird die Hülle 4 so an das aufzunehmende Stückgut 6 angepresst, dass die Haltekraft 9 in ausreichendem Maße bereitgestellt wird.

Neben dem Ausführungsbeispiel der Fig. 6 und 7, bei dem die zum Anheben und Transportieren des vereinzelten Stückguts 6 erforderliche Haltekraft durch Aufblasen eines oder mehrerer in sich geschlossener, aus ganz bzw. nur in Teilen folienbzw. membranartig ausgeführter Materialien realisierter Kammervolumina ausgeübt wird, sind weitere Greifvorrichtungen denkbar, bei denen das Anpressen der folien- bzw. membranartigen Hülle 4 mittels mechanisch, pneumatisch, hydraulisch, thermisch, elektrisch oder auf sonstigen physikalischen Wirkprinzipien beruhender bzw. induzierter Krafteinwirkung von außen erfolgt.

Die Erfindung ist nicht auf die angegebenen Ausführungsbeispiele beschränkt, sondern ist sinngemäß auf weitere anwendbar. Beispielsweise ist es denkbar, zur ganz bzw. teilweisen Erfüllung der Funktionalitäten der folien- bzw. membranartig ausgeführten Hülle auch auf alternative, nicht auf Folienkunststoffen beruhende Materialien zurückzugreifen wie beispielsweise geeignete evtl. vorbehandelte Textilien und Stoffe, bürsten- bzw. besenartige Anordnung von Borsten, dünne metallische oder neuartige Faserverbundwerkstoffe, welche eine dem Erfindungsgegenstand in Fig. 1-7 vergleichbare Greifvorrichtung zu bilden vermögen.

Des Weiteren kann das Zugriffsverhalten der Hülle 4 gezielt beeinflusst werden, um eine bevorzugte Greifposition zu erreichen, beispielsweise indem durch unterschiedliche Maschenweiten oder Loch- bzw. Düsendurchmesser bei der Auslegung der schnur-, netz-, oder gewebeartigen mechanischen Verbindungen 5 lokal die aerodynamischen Umgebungsbedingungen oder das Artsaugverhalten begünstigend beeinflusst werden.

Weiter ist es in jedem Fall möglich, in die Greifvorrichtungen 1 und 15 eine beliebige Sensor/Detektor-Kombination zu integrieren, welche anhand beispielsweise elektromechanischer, optischer, magnetischer, akustischer oder anderer Mess- und Wirkprinzipien die Detektion von Systemzuständen ermöglicht, sodass beispielsweise die Ermittlung von Beladezustand, erfolgreich ausgeführtem Zugriff, erfolgreicher Vereinzelung von Gegenständen, Objekterkennung, Objektidentifizierung oder die Positions-, Lage- bzw. Geometriebestimmung des zu hebenden Gegenstands, der Unterlage, der Behältnisse, des Manipulator- bzw. Roboterarms oder darüber hinausgehende ähnliche Messungen möglich sind. Diese kann entweder im Saugrohr 2 bzw. innerhalb der Greifinstrumente integriert sein. Es ist ebenso denkbar, durch eine bzw. mehrere geeignete Messöffnungen, ganz oder teilweise transparente Werkstoffe oder durch die Saugleitung hindurch derartige Messungen vorzunehmen.

## Patentansprüche

1. Greifvorrichtung zum Aufnehmen von Stückgut, aufweisend eine Haltekraftzuführvorrichtung, insbesondere ein Saugrohr oder eine Überdruckleitung, und einen Greifkopf, der aus einer flexiblen, im luftdichten Hülle (4, 11) besteht, die bei Ausübung einer Haltekraft (9) so an das aufzunehmende Stückgut (6) augepaβt wird, dass sie dieses zumindest teilweise umschließt, **dadurch gekennzeichnet, dass** der Greifkopf mehrere flexible, im Ruhezustand abgespreizte Haltevorrichtungen (3) aufweiset, die bei Ausübung der Haltekraft durch die flexible uptdichte Hülle (4,11) an das aufzunehmende Stückgut (6) augepaβt werden.

2. Greifvorrichtung nach Anspruch 1, **dadurch gekennzeichnet**, die Haltevorrichtungen (3) auf der dem Stückgut (6) zugewandten Seite des Greifkopfes ausgebildet sind.

3. Greifvorrichtung nach Anspruch 1 oder 2, **dadurch gekennzeichnet, dass** die Haltekraft (9) mittels Unterdruck im Greifkopf erzeugbar ist.

4. Greifvorrichtung nach einem der vorangegangenen Ansprüche, **dadurch gekennzeichnet, dass** die Haltekraft (9) durch einen Überdruck am Greifkopf erzeugbar ist.

5. Greifvorrichtung nach Anspruch 4, **dadurch gekennzeichnet, dass** mittels Überdruck zumindest eine in sich geschlossene, luftdichte, am Greifkopf vorgesehene Luftkammer, insbesondere die Hülle (11) aufblasbar ist, wodurch die Haltekraft (9) erzeugbar ist.

6. Greifvorrichtung nach einem der Ansprüche 1 bis 3, **dadurch gekennzeichnet, dass** im Innern des Saugrohres (2) und/oder zwischen den Haltevorrichtungen (3) zumindest eine Verbindung (5) ausgebildet ist.

7. Greifvorrichtung nach Anspruch 6, **dadurch gekennzeichnet, dass** die Verbindung (5) eine schnur-, netz- oder gewebeartige Verbindung ist.

8. Greifvorrichtung nach einem der vorangegangenen Ansprüche, **dadurch gekennzeichnet, dass** die Hülle (4, 11) aus Kunststofffolie besteht.

9. Greifvorrichtung nach einem der Ansprüche 1 bis 7, **dadurch gekennzeichnet, dass** die Hülle (4, 11) aus im wesentlichen luftdichten, insbesondere vorbehandelten Textilmaterialien, bürsten- oder besenartigen Anordnungen von Borsten, dünnen metallischen Werkstoffen oder Faserverbundwerkstoffen besteht.

10. Greifvorrichtung nach einem der vorangegangenen Ansprüche, **dadurch gekennzeichnet, dass** die Haltekraftzuführvorrichtung (2) und die Haltevorrichtungen (3) einstückig ausgebildet sind.

11. Greifvorrichtung nach einem der vorangegangenen Ansprüche, **dadurch gekennzeichnet, dass** die Hülle (4, 11) und/oder die Haltevorrichtungen (3) zumindest auf der dem Stückgut (6) zugewandten Seite reibungserhöhende Mittel aufweisen.

12. Greifvorrichtung nach einem der vorangegangen Ansprüche, **dadurch gekennzeichnet, dass** die Hülle (4, 11) und/oder die Haltevorrichtungen (3) zumindest auf der dem Stückgut (6) zugewandten Seite eine Schutzschicht aufweisen.

13. Greifvorrichtung nach einem der vorangegangenen Ansprüche, **dadurch gekennzeichnet, dass** auf der Hülle (4, 11) und/oder den Haltevorrichtungen (3) zumindest teilweise eine weiche, verformbare Auflage vorgesehen ist.

14. Greifvorrichtung nach Anspruch 13 **dadurch gekennzeichnet, dass** die Auflage aus einem schaumgummiartigen Material besteht.

15. Greifvorrichtung nach einem der vorangegangenen Ansprüche, **dadurch gekennzeichnet, dass** die Haltevorrichtungen (3) aus einer Vielzahl an Einzelborsten bestehen, die insbesondere bürstenartig angeordnet sind.

16. Greifvorrichtung nach einem der vorangegangenen Ansprüche, **dadurch gekennzeichnet, dass** die Haltevorrichtungen (3) und die Hülle (4, 11) lose miteinander verbunden sind.

17. Greifvorrichtung nach einem der Ansprüche 1 bis 15, **dadurch gekennzeichnet, dass** die Haltevorrichtungen (3) und die Hülle (4, 11) unmittelbar miteinander verbunden sind.

18. Greifvorrichtung nach einem der vorangegangenen Ansprüche, **dadurch gekennzeichnet, dass** die Greifvorrichtung (1, 15) eine Sensor/Detektor-Kombination aufweist, welche anhand insbesondere elektromechanischer, optischer, magnetischer, akustischer oder anderer Mess- und Wirkprinzipien die Detektion von Systemzuständen ermöglicht, sodass insbesondere ein Beladungszustand, ein erfolgreich ausgeführter Zugriff, eine erfolgreiche Vereinzelung von Stückgut, eine Objekterkennung oder eine Objektidentifizierung feststellbar ist oder eine Positions-, Lage- bzw. Geometriebestimmung des aufzunehmenden Stückguts, einer Unterlage, eines Behältnisses oder eines Manipulator- bzw. Roboterarms durchführbar ist.

19. Greifvorrichtung nach Anspruch 18, **dadurch gekennzeichnet, dass** die Greifvorrichtung (1, 15) für die Detektion von Systemzuständen zumindest eine Messöffnung aufweist und/oder aus zumindest teilweise transparenten Werkstoffen gefertigt ist.

## Claims

1. Gripping device for picking up piece goods, having a holding force supply fixture, in particular a suction pipe or an excess pressure line, and a gripping head made of a flexible, airtight sleeve (4, 11) which, when a holding force (9) is exerted, is so adapted to the piece goods (6) to be picked up that it at least partly encloses the latter, **characterised in that** the gripping head has several flexible holding devices (3), spread apart in the non-operative state and which, when the holding force is exerted through the flexible airtight sleeve (4, 11), are adapted to the piece goods (6).

2. Gripping device according to claim 1, **characterised in that** the holding devices (3) are formed on the side of the gripping head facing the piece goods (6).

3. Gripping device according to claim 1 or 2, **characterised in that** the holding force (9) may be generated by means of vacuum in the gripping head.

4. Gripping device according to any of the preceding claims, **characterised in that** the holding force (9) may be generated by means of excess pressure at the gripping head.

5. Gripping device according to claim 4, **characterised in that** by means of excess pressure, one or more self-contained, airtight air chambers provided on the gripping head, in particular the sleeve (11), are inflatable, by means of which the holding force (9) may be generated.

6. Gripping device according to any of claims 1 to 3, **characterised in that** at least one connection (5) is formed inside the suction pipe (2) and/or between the holding devices (3).

7. Gripping device according to claim 6, **characterised in that** the connection (5) is a cord-, net- or fabric-type connection.

8. Gripping device according to any of the preceding claims, **characterised in that** the sleeve (4, 11) is made of plastic sheet.

9. Gripping device according to any of claims 1 to 7, **characterised in that** the sleeve (4, 11) is made of substantially airtight, in particular pre-treated, textile materials, brush- or broom-like arrangements of bristles, thin metallic materials or fibre composites.

10. Gripping device according to any of the preceding claims, **characterised in that** the holding force supply fixture (2) and the holding devices (3) form an integral unit.

11. Gripping device according to any of the preceding claims, **characterised in that** the sleeve (4, 11) and/or the holding devices (3) have friction-enhancing means at least on the side facing the piece goods (6).

12. Gripping device according to any of the preceding claims, **characterised in that** the sleeve (4, 11) and/or the holding devices (3) have a protective coating at least on the side facing the piece goods (6).

13. Gripping device according to any of the preceding claims, **characterised in that** the sleeve (4, 11) and/or the holding devices (3) are provided at least partly with a soft, deformable support.

14. Gripping device according to claim 13, **characterised in that** the support is made of a foam-rubber-like material.

15. Gripping device according to any of the preceding claims, **characterised in that** the holding devices (3) consist of a multiplicity of individual bristles, arranged in particular in the form of a brush.

16. Gripping device according to any of the preceding claims, **characterised in that** the holding devices (3) and the sleeve (4, 11) are loosely connected to one another.

17. Gripping device according to any of claims 1 to 15, **characterised in that** the holding devices (3) and the sleeve (4, 11) are directly connected to one another.

18. Gripping device according to any of the preceding claims, **characterised in that** the gripping device (1, 15) has a sensor/detector combination which, with the aid of in particular electro-mechanical, optical, magnetic, acoustic or other principles of measuring and action, allows the detection of system conditions, so that in particular a state of loading, a successfully executed gripping movement, a successful picking of piece goods, an object recognition or object identification may be determined, or a determination of the position, location or geometry of the piece goods to be picked up, a support, a container or a manipulator or robot arm may be made.

19. Gripping device according to claim 18, **characterised in that** the gripping device (1, 15) has one or more measuring apertures for the detection of system conditions and/or is made from at least partly transparent material.

## Revendications

1. Dispositif de préhension de charges unitaires, comportant un dispositif d'amenée de force de retenue, en particulier un tube d'aspiration ou une conduite à surpression, et une tête de préhension, qui est composée d'une enveloppe flexible hermétique à l'air (4, 11) qui, lorsqu'une force de retenue (9) est exercée, est adaptée à la charge unitaire à prendre (6) de manière à l'entourer au moins partiellement, **caractérisé en ce que** la tête de préhension comporte plusieurs dispositifs de retenue (3) flexibles écartés à l'état de repos qui, lorsque la force de retenue est exercée, sont adaptés à la charge unitaire à prendre (6) grâce à l'enveloppe flexible hermétique à l'air (4, 11).

2. Dispositif de préhension selon la revendication 1, **caractérisé en ce que** les dispositifs de retenue (3) sont réalisés sur le côté de la tête de préhension tournée vers la charge unitaire (6).

3. Dispositif de préhension selon la revendication 1 ou 2, **caractérisé en ce que** la force de retenue (9) peut être générée au moyen d'une dépression dans la tête de préhension.

4. Dispositif de préhension selon l'une des revendications précédentes, **caractérisé en ce que** la force de retenue (9) peut être générée par une surpression au niveau de la tête de préhension.

5. Dispositif de préhension selon la revendication 4, **caractérisé en ce que**, grâce à une surpression, au moins une chambre d'air hermétique refermée sur elle-même, prévue au niveau de la tête de préhension, en particulier l'enveloppe (11), est rendue gonflable, ce qui permet de générer la force de retenue (9).

6. Dispositif de préhension selon l'une des revendications 1 à 3, **caractérisé en ce que**, à l'intérieur du tube d'aspiration (2) et/ou entre les dispositifs de retenue (3), au moins une liaison (5) est réalisée.

7. Dispositif de préhension selon la revendication 6, **caractérisé en ce que** la liaison (5) est une liaison de type fil, filet ou nappe textile.

8. Dispositif de préhension selon l'une des revendications précédentes, **caractérisé en ce que** l'enveloppe (4, 11) est composée d'un film en matière plastique.

9. Dispositif de préhension selon l'une des revendicafons 1 à 7, **caractérisé en ce que** l'enveloppe (4, 11) est essentiellement composée de matériaux textiles hermétiques à l'air, en particulier prétraités, de dispositions de poils de type brosse ou balai, de matériaux métalliques minces ou de matériaux composites en fibres.

10. Dispositif de préhension selon l'une des revendications précédentes, **caractérisé en ce que** le dispositif d'amenée de force de retenue (2) et les dispositifs de retenue (3) sont réalisés en une seule pièce.

11. Dispositif de préhension selon l'une des revendications précédentes, **caractérisé en ce que** l'enveloppe (4, 11) et/ou les dispositifs de retenue (3) comportent au moins sur le côté tourné vers la charge unitaire (6) des moyens qui augmentent la friction.

12. Dispositif de préhension selon l'une des revendications précédentes, **caractérisé en ce que** l'enveloppe (4, 11) et/ou les dispositifs de retenue (3) comportent une couche de protection au moins sur le côté tourné vers la charge unitaire (6).

13. Dispositif de préhension selon l'une des revendications précédentes, **caractérisé en ce que** sur l'enveloppe (4, 11) et/ou sur les dispositifs de retenue (3) une couche souple déformable est au moins en partie prévue.

14. Dispositif de préhension selon la revendication 13, **caractérisé en ce que** la couche est composée d'un matériau de type caoutchouc mousse.

15. Dispositif de préhension selon l'une des revendications précédentes, **caractérisé en ce que** les dispositifs de retenue (3) sont composés d'une multitude de poils individuels qui sont en particulier disposés comme des brosses.

16. Dispositif de préhension selon l'une des revendications précédentes, **caractérisé en ce que** les dispositifs de retenue (3) et l'enveloppe (4, 11) sont reliés entre eux de manière séparable.

17. Dispositif de préhension selon l'une des revendications 1 à 15, **caractérisé en ce que** les dispositifs de retenue (3) et l'enveloppe (4, 11) sont directement reliés entre eux.

18. Dispositif de préhension selon l'une des revendications précédentes, **caractérisé en ce que** le dispositif de préhension (1, 15) comporte une combinaison capteur/détecteur qui, en particulier à l'aide de principes de mesure et d'action électromagnétiques, optiques, magnétiques, acoustiques ou autres, permettent la détection d'états du système, si bien qu'en particulier un état de chargement, un accès réussi, une séparation réussie de charges unitaires, la reconnaissance d'un objet ou l'identification d'un objet peuvent être constatés et/ou que la détermination de la position, de l'orientation et/ou de la géométrie de la charge unitaire à prendre, d'un support, d'un récipient ou d'un bras de manipulateur ou de robot peut être effectuée.

19. Dispositif de préhension selon la revendication 18, **caractérisé en ce que** le dispositif de préhension (1, 15) comporte au moins un orifice de mesure pour la détection d'états du système et/ou est fabriqué avec des matériaux au moins partiellement transparents.
